# EUROPÄISCHE PATENTSCHRIFT

(11) **EP 2 158 041 B1**
(45) Veröffentlichungstag und Bekanntmachung des Hinweises auf die Patenterteilung: **16.10.2013**
(21) Anmeldenummer: 08761107.5
(22) Anmeldetag: 17.06.2008
(51) Int. Cl.: B01J 19/00, B01F 13/00, B01F 15/02

(54) **MIKROFLUIDIKSYSTEM ZUM MISCHEN VON MINDESTENS ZWEI AUSGANGSSTOFFEN**
MICROFLUIDICS SYSTEM FOR MIXING AT LEAST TWO STARTING MATERIALS
SYSTÈME MICROFLUIDIQUE POUR MÉLANGER AU MOINS DEUX SUBSTANCES DE DÉPART

(30) Priorität: 19.06.2007 DE 102007028116
(43) Veröffentlichungstag der Anmeldung: 03.03.2010
(73) Patentinhaber: Siemens Aktiengesellschaft, 80333 München (DE)
(72) Erfinder: LOHF, Astrid, 91056 Erlangen (DE)
(86) Internationale Anmeldenummer: PCT/EP2008/057616
(87) Internationale Veröffentlichungsnummer: WO 2008/155327

(56) Entgegenhaltungen:
- EP-A- 1 510 255
- WO-A-2006/122191
- WO-A-2007/021812
- US-A1- 2005 232 387

## Beschreibung

Mikrofluidiksysteme versprechen bei der Durchführung von chemischen Misch- und Reaktionsprozessen gegenüber makroskopischen Systemen enorme Verbesserungen bezüglich Qualität, Schnelligkeit und Kostenaufwand, da die Reaktions- und Verweilzeiten in den Fluidpfaden von Mikrofluidiksystemen sehr kurz sind und nur sehr geringe Substanzmengen hochgenau und reproduzierbar eingesetzt und verarbeitet werden. Um insbesondere bei industrieller Produktion den Anforderungen an Menge, Durchsatz und Produktivität genügen zu können, müssen die Fluidpfade (Misch- oder Reaktionsstränge), gegebenenfalls in hoher Anzahl, parallel geschaltet werden (numbering-up). Die Parallelschaltung kann je nach Anwendungsfall dadurch geschehen, dass in Mikrofluidik-Bauteilen, beispielsweise einem Mischer oder Reaktor, jeweils mehrere gleichartige Mikrokanäle ausgebildet und parallel geschaltet sind, oder dass ganze Mikrofluidik-Bauteile bzw. aus Mikrofluidik-Bauteilen zusammengesetzte Systeme mehrfach parallel geschaltet werden. Durch geeignete Verfahren der Mikrotechnik (z. B. Ätzverfahren, LIGA-Technik oder Mikromechanik) können die parallelen Fluidpfade mit hoher Präzision gleichartig hergestellt werden, so dass in allen parallel geschalteten Fluidpfaden jeweils dieselben Prozessverhältnisse, wie Druck, Temperatur, Massendurchfluss usw., herrschen sollten und daher aus allen parallelen Misch- bzw. Reaktionssträngen jeweils die gleichen Produkte erhalten und ohne Qualitätsverluste zusammengeführt werden können. Dies setzt aber auch voraus, dass alle parallel geschalteten Misch- oder Reaktionsstränge mit den gleichen Volumenströmen an Ausgangsstoffen (Edukten) versorgt werden. Hier ergibt sich das Problem, dass Mikrofluidiksysteme zu betriebsbedingten Veränderungen des effektiven Durchflusswiderstandes aufgrund von Verstopfungen der Fluidpfade neigen. So können z. B. Reaktionsprodukte als Feststoffe an den Kanalwandungen festwachsen (Fouling), wodurch sich der Druckabfall über dem Reaktionsstrang erhöht, und dann wieder lösen, was dazu führt, dass sich der Druckabfall schlagartig verringert. Dieses Verhalten kann zyklisch und für jeden Reaktionsstrang unterschiedlich stark bzw. zu unterschiedlichen Zeiten auftreten. Während in makroskopischen Systemen beispielsweise der Massendurchfluss ohne weiteres und nahezu storungsfrei gemessen und einer Durchflussregelung aufgegeben werden kann, ist dies bei parallelisierten Mikrofluidiksystemen für die einzelnen Fluidpfade mit vertretbarem Aufwand nicht möglich.

Aus der EP 1 510 255 A1 ist ein Mikrofluidiksystem zum Mischen von mindestens zwei Ausgangsstoffen bekannt,
- mit einem einzigen Misch- oder Reaktionsstrang, in dem eine der Anzahl der Ausgangsstoffe entsprechende Zahl von Zuführungskanälen in einen Misch- bzw. Reaktionskanal münden,
- mit jeweils einer Ansaugleitung für jeden Ausgangsstoff,
- mit jeweils einer Spritzenpumpe (die aus zwei einzelnen Spritzen besteht, von denen jeweils eine saugt und die andere drückt) für jeden Zuführungskanal,
- mit jeweils einer Ventilschaltung zwischen jeder Ansaugleitung eines Ausgangsstoffes, den Zuführungskanälen für den betreffenden Ausgangsstoff und den Spritzenpumpen für diese Zufuhrungskahäle,
- wobei die Ventilschaltung dazu ausgebildet ist, die Spritzenpumpen in einer ersten Ventilstellung mit der Ansaugleitung zu verbinden und in einer zweiten Ventilstellung mit den jeweils zugeordneten Zuführungskanälen zu verbinden.

Aus der US 2005/0232387 A1 ist ein Mikrofluidiksystem zum Mischen von zwei Ausgangsstoffen bekannt, bei dem zwei Spritzenpumpen die Ausgangsstoffe durch zwei Zuführungskanäle in einen Misch- bzw. Reaktionskanal fördern. Weiterhin ist aus der US 2005/0232387 A1 eine Ventilschaltung zur kontinuierlichen Förderung des jeweiligen Ausgangsstoffes und zur Füllung der jeweiligen, hier aus zwei einzelnen Spritzen bestehenden, Spritzenpumpe bekannt, wobei die Ventilschaltung dazu ausgebildet ist, eine der beiden Spritzen in einer ersten Ventilstellung mit einer Ansaugleitung für den jeweiligen Ausgangsstoff zu verbinden, in einer zweiten Ventilstellung abzusperren und in einer dritten Ventilstellung mit dem Zuführungskanal und der daran liegenden anderen Spritze zu verbinden.

Aus der EP 0 299 658 A2 ist ein System zum Mischen von mindestens Ausgangsstoffen bekannt, bei dem zwei mittels eines gemeinsamen Antriebs synchron angetriebene Spritzenpumpen über Ventilanordnungen die Ausgangsstoffe aus Reservoirs ansaugen und anschließend durch zwei Zuführungskanäle in eine Mischeinheit fördern.

Aus der DE 20 2005 007 485 U1 ist eine Anordnung zum Dosieren von Fluiden mittels Spritzenpumpen und diesen zugeordneten Ventilen zur Umschaltung zwischen Fluidaufnahme und Fluidabgabe bekannt. Dabei können mehrere der Spritzenpumpen über einen einzigen Antrieb parallel betrieben werden.

Aus der DE 103 41 110 A1 ist eine mikrotechnisch auf einem Chip ausgebildete Misch- und Dosierstrecke bekannt, die über Ventile von einer Spritzenpumpe mit den Ausgangsstoffen befüllt wird.

Der Erfindung liegt die Aufgabe zugrunde, bei einem Mikrofluidiksystem alle parallel geschalteten Misch- oder Reaktionsstränge mit den gleichen Volumenströmen an Ausgangsstoffen zu versorgen und dabei den anfänglichen Volumenstrom für ein und denselben Ausgangsstoff zu vergleichmäßigen.

Gemäß der Erfindung wird die Aufgabe durch das in Anspruch 1 angegebene Mikrofluidiksystem gelöst.

Anspruch 2 gibt eine vorteilhafte Ausbildung des erfindungsgemäßen Mikrofluidiksystems an.

Gegenstand der Erfindung ist somit ein Mikrofluidiksystem zum Mischen von mindestens zwei Ausgangsstoffen,
- mit einer vorgegebenen Anzahl von parallelen und gleichartigen Misch- oder Reaktionssträngen, in denen jeweils eine der Anzahl der Ausgangsstoffe entsprechende Zahl von Zuführungskanälen in einen Misch- bzw. Reaktionskanal münden,
- mit jeweils einer Ansaugleitung für jeden Ausgangsstoff,
- mit jeweils einer Spritzenpumpe für jeden Zuführungskanal,
- mit jeweils einer Ventilschaltung zwischen jeder Ansaugleitung eines Ausgangsstoffes, den Zuführungskanälen für den betreffenden Ausgangsstoff und den Spritzenpumpen für diese Zuführungskanäle,
- wobei die Ventilschaltung dazu ausgebildet ist, die Spritzenpumpen in einer ersten Ventilstellung mit der Ansaugleitung zu verbinden, in einer zweiten Ventilstellung abzusperren und in einer dritten Ventilstellung mit den jeweils zugeordneten Zuführungskanälen zu verbinden,
- wobei in der zweiten Ventilstellung die an jeder Ventilschaltung jeweils angeschlossenen Spritzenpumpen untereinander fluidisch verbunden sind und
- wobei die an jeder Ventilschaltung jeweils angeschlossenen Spritzenpumpen einen gemeinsamen Antrieb aufweisen.

Für jeden Misch- oder Reaktionsstrang ist pro Ausgangsstoff jeweils eine Spritzenpumpe vorgesehen, wobei diese Spritzenpumpen gemeinsam angetrieben werden, so wie dies z. B. für Doppel-Spritzenpumpen bekannt ist. In der ersten Ventilstellung werden die Spritzenpumpen gleichzeitig durch Ansaugen mit dem betreffenden Ausgangsstoff gefüllt. In der zweiten Ventilstellung werden die angesaugten Ausgangsstoffe auf einen vorgegebenen Druck gebracht. Dabei sind die einzelnen Spritzenpumpen untereinander fluidisch verbunden, so dass in allen Spritzenpumpen derselbe Druck herrscht. In der dritten Ventilstellung werden die Ausgangsstoffe auf die parallelen Misch- oder Reaktionsstränge verteilt, wobei jede Spritzenpumpe jeweils einen Reaktions- bzw. Mischstrang versorgt und von den jeweils anderen Spritzenpumpen fluidisch entkoppelt ist. Da alle Spritzenpumpen gemeinsam angetrieben werden, sind die Volumenströme in allen parallelen Misch- oder Reaktionssträngen gleich, auch wenn diese unterschiedliche Durchflusswiderstände aufweisen.

Um eine kontinuierliche Versorgung der Misch- oder Reaktionsstränge zu erreichen, kann in an sich bekannter Weise für jede Spritzenpumpe eine mit dieser komplementär arbeitende weitere Spritzenpumpe vorgesehen werden, wobei die beiden Spritzenpumpen abwechselnd den Ausgangsstoff ansaugen und dem Reaktionsstrang zuführen.

Zur weiteren Erläuterung der Erfindung wird im Folgenden auf die Figuren der Zeichnung Bezug genommen; im Einzelnen zeigen:
- Figur 1: ein schematisches Ausführungsbeispiel des erfindungsgemäßen Mikrofluidiksystems und
- Figur 2: ein detaillierteres Beispiel für die Versorgung unterschiedlicher Misch- oder Reaktionsstränge mit einem Ausgangsstoff.

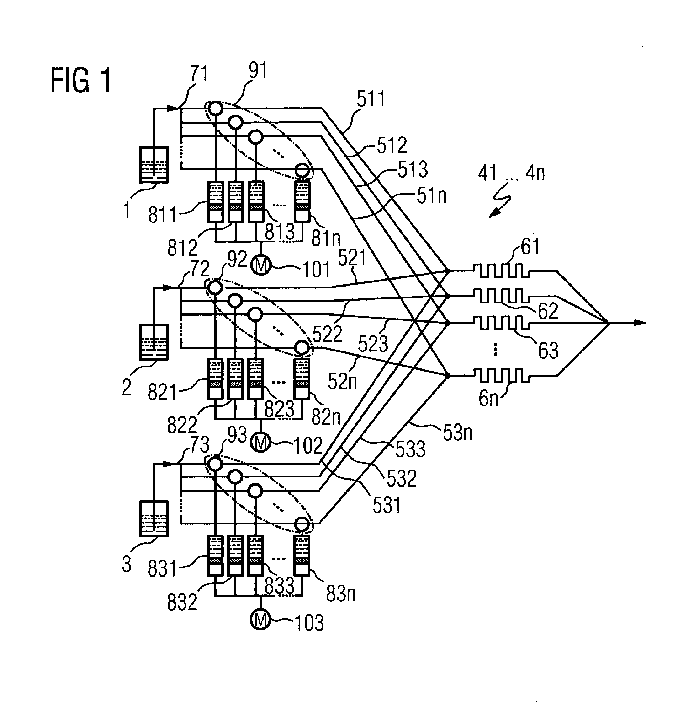

Figur 1 zeigt ein Mikrofluidiksystem zum Mischen von hier m = 3 Ausgangsstoffen 1, 2 und 3, die in Vorlagebehältern enthalten sind. Das Mikrofluidiksystem weist n parallele und gleichartige Misch- oder Reaktionsstränge 41 ... 4n auf, in denen jeweils eine der Anzahl der Ausgangsstoffe 1, 2, 3 entsprechende Zahl von Zuführungskanälen 511 ... 53n in jeweils einen Misch- bzw. Reaktionskanal 61 ... 6n münden. Die Ausgangsstoffe 1, 2, 3 werden über Ansaugleitungen 71, 72, 73 aus den Vorlagebehältern angesaugt und anschließend auf die Zuführungskanäle 511 ... 53n verteilt. Dazu ist für jeden Zuführungskanal 511 ... 53n jeweils eine Spritzenpumpe 811 ... 83n vorgesehen, wobei zwischen jeder Ansaugleitung 71, 72, 73 eines Ausgangsstoffes 1, 2, 3, den Zuführungskanälen 511 ... 53n für den betreffenden Ausgangsstoff 1, 2, 3 und den Spritzenpumpen 811 ... 83n für diese Zuführungskanäle 511 ... 53n jeweils eine steuerbare Ventilschaltung 91, 92, 93 liegt Die Ventilschaltungen 91, 92, 93 sind jeweils dazu ausgebildet, in einer ersten Ventilstellung zum Ansaugen des Ausgangsstoffs 1, 2, 3 aus dem Vorlagebehälter die Spritzenpumpen 811 ... 83n mit der betreffenden Ansaugleitung 71, 72, 73 zu verbinden, in einer zweiten Ventilstellung die Spritzenpumpen 811 ... 83n abzusperren, um in den Spritzenpumpen 811 ... 83n einen Betriebsdruck aufbauen zu können, und in einer dritten Ventilstellung die Spritzenpumpen 811 ... 83n mit den jeweils zugeordneten Zuführungskanälen 511 ... 53n zu verbinden, um den Ausgangsstoff 1, 2, 3 in die betreffenden Zuführungskanäle 511 ... 53n zu drücken. Die an jeder Ventilschaltung 91, 92, 93 jeweils angeschlossenen Spritzenpumpen 811 ... 83n weisen einen gemeinsamen Antrieb 101, 102, 103 auf und werden parallel angetrieben.

Die Ventilschaltungen 91, 92, 93 können, wie in Figur 1 angedeutet, aus Einzelventilen bestehen oder als Mehrwegeventile aufgebaut sein.

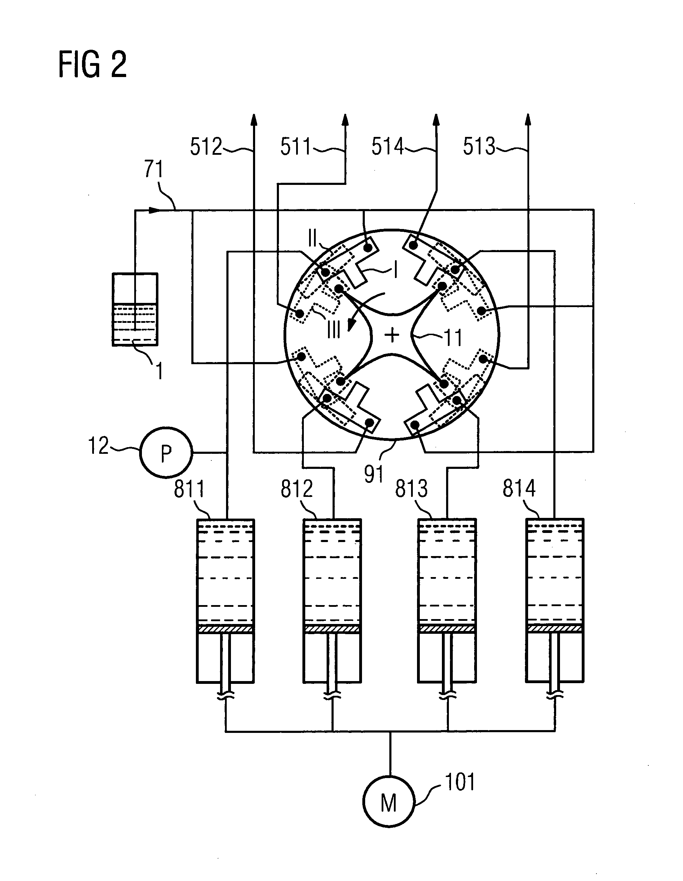

Figur 2 zeigt ein Beispiel für die Ventilschaltung 91 in Form eines Mehrwege-Drehventils, über das die hier z. B. n = 4 Spritzenpumpen 811 ... 814 in der ersten, mit ausgezogenen Linien dargestellten Ventilstellung I mit der Ansaugleitung 71 für den Ausgangsstoff 1 und in der dritten, mit gepunkteten Linien dargestellten Ventilstellung III mit den einzelnen Zuführungskanälen 511 ... 513 verbindbar sind. In der zweiten mittleren Ventilstellung II, die hier mit gestrichelten Linien dargestellt ist, sind die Spritzenpumpen 811 ... 814 abgesperrt, um den angesaugten Ausgangsstoff 1, bevor er in die Zuführungskanälen 511 ... 513 eingeleitet wird, auf einen vorgegebenen Druck ringen zu können. In dieser Ventilstellung sind die einzelnen Spritzenpumpen 811 ... 814 untereinander fluidisch verbunden (Verbindung 11), so dass in allen Spritzenpumpen 811 ... 814 derselbe Druck herrscht und mit einem einzigen Drucksensor 12 gemessen werden kann.

## Patentansprüche

1. Mikrofluidiksystem zum Mischen von mindestens zwei Ausgangsstoffen (1, 2, 3),
- mit einer vorgegebenen Anzahl von parallelen und gleichartigen Misch- oder Reaktionssträngen (41 ... 4n), in denen jeweils eine der Anzahl der Ausgangsstoffe (1, 2, 3) entsprechende Zahl von Zuführungskanälen (511 ... 53n) in einen Misch- bzw. Reaktionskanal (61 ... 6n) münden,
- mit jeweils einer Ansaugleitung (71, 72, 73) für jeden Ausgangsstoff (1, 2, 3),
- mit jeweils einer Spritzenpumpe (811 ... 83n) für jeden Zuführungskanal (511 ... 53n),
- mit jeweils einer Ventilschaltung (91, 92, 93) zwischen jeder Ansaugleitung (71, 72, 73) eines Ausgangsstoffes (1, 2, 3),den Zuführungskanälen (511 ... 53n) für den betreffenden Ausgangsstoff (1, 2, 3) und den Spritzenpumpen (811 ... 83n) für diese Zuführungskanäle (511 ... 53n),
- wobei die Ventilschaltung (91, 92, 93) dazu ausgebildet ist, die Spritzenpumpen (811 ... 83n) in einer ersten Ventilstellung (I) mit der Ansaugleitung (71, 72, 73) zu verbinden, in einer zweiten Ventilstellung (II) abzusperren und in einer dritten Ventilstellung (III) mit den jeweils zugeordneten Zuführungskanälen (511 ... 53n) zu verbinden,
- wobei in der zweiten Ventilstellung (II) die an jeder Ventilschaltung (91, 92, 93) jeweils angeschlossenen Spritzenpumpen (811 ... 83n) untereinander fluidisch verbunden sind und
- wobei die an jeder Ventilschaltung (91, 92, 93) jeweils angeschlossenen Spritzenpumpen (811 ... 83n) einen gemeinsamen Antrieb (101, 102, 103) aufweisen.

2. Mikrofluidiksystem nach Anspruch 1, **dadurch gekennzeichnet, dass** für jede Spritzenpumpe (811 ... 83n) eine mit dieser komplementär arbeitende weitere Spritzenpumpe vorhanden ist.

## Claims

1. Microfluidics system for mixing at least two starting materials (1, 2, 3),
- with a predetermined number of parallel and identical mixing or reaction branches (41 ... 4n), in each of which a number of supply ducts (511 ... 53n) which corresponds to the number of starting materials (1, 2, 3) issue into a mixing or reaction duct (61 ... 6n),
- in each case with an intake line (71, 72, 73) for each starting material (1, 2, 3),
- in each case with an injection pump (811 ... 83n) for each supply duct (511 ... 53n),
- in each case with a valve circuit (91, 92, 93) between each intake line (71, 72, 73) of a starting material (1, 2, 3), the supply ducts (511 ... 53n) for the respective starting material (1, 2, 3) and the injection pumps (811 ... 83n) for these supply ducts (511 ... 53n),
- the valve circuit (91, 92, 93) being designed, in a first valve position (I), for connecting the injection pumps (811 ... 83n) to the intake line (71, 72, 73), in a second valve position (II) for shutting off said injection pumps and, in a third valve position (III), for connecting them to the supply ducts (511 ... 53n) assigned in each case,
- in the second valve position (II) the injection pumps (811 ... 83n) in each case connected to each valve circuit (91, 92, 93) being fluidically connected to one another, and
- the injection pumps (811 ... 83n) in each case connected to each valve circuit (91, 92, 93) having a common drive (101, 102, 103).

2. Microfluidics system according to Claim 1, **characterized in that**, for each injection pump (811 ... 83n), a further injection pump operating complementarily to this is present.

## Revendications

1. Système microfluidique pour mélanger au moins deux substances ( 1, 2, 3 ) de départ,
- comprenant un nombre prescrit de branches ( 41 ... 4n ) de mélange ou de branches de réaction parallèles et de même type, dans lesquelles respectivement un nombre correspondant au nombre des substances ( 1, 2, 3 ) de départ de canaux ( 511 ... 53n ) d'amenée débouche dans un canal ( 61 ... 6n ) de mélange ou de réaction,
- comprenant respectivement un conduit ( 71, 72, 73 ) d'aspiration pour chaque substance ( 1, 2, 3 ) de départ,
- comprenant respectivement une pompe ( 811 ... 83n ) d'injection pour chaque canal ( 511 ... 53n ) d'amenée,
- comprenant respectivement un circuit ( 91, 92, 93 ) de vanne entre chaque conduit ( 71, 72, 73 ) d'aspiration d'une substance ( 1, 2, 3 ) de départ, les canaux ( 511 ... 53n ) d'amenée pour la substance ( 1, 2, 3 ) de départ concernée et les pompes ( 811 ... 83n ) d'injection pour ces canaux ( 511 ... 53n ) d'amenée,
- dans lequel le circuit ( 91, 92, 93 ) de vanne est constitué pour faire communiquer les pompes ( 811 ... 83n ) d'injection en une première position ( I ) de vanne avec le conduit ( 71, 72, 73 ) d'aspiration, pour interrompre la communication dans une deuxième position ( II ) de vanne et pour les faire communiquer dans une troisième position ( III ) de vanne avec les canaux ( 511 ... 53n ) d'amenée associés respectivement,
- dans lequel, dans la deuxième position ( II ) de vanne, les pompes ( 811 ... 83n ) d'injection raccordées respectivement à chaque circuit ( 91, 92, 93 ) de vanne communiquent fluidiquement entre elles et
- dans lequel les pompes ( 811 ... 83n ) d'injection raccordées respectivement à chaque circuit ( 91, 92, 93 ) de vanne ont un entraînement ( 101, 102, 103 ) commun.

2. Système microfluidique suivant la revendication 1, **caractérisé en ce que**, pour chaque pompe ( 811 ... 83n ) d'injection, il y a une autre pompe d'injection fonctionnant de manière complémentaire avec celle-ci.
